# DEMANDE DE BREVET EUROPEEN

(11) **EP 3 255 261 A1**
(43) Date de publication de la demande: **13.12.2017**
(21) Numéro de dépôt: 17172031.1
(22) Date de dépôt: 19.05.2017
(51) Int. Cl.: F02B 37/24, F02B 39/16, F02D 41/00, F01D 17/20, F01D 17/12, F01D 17/16, F02C 6/12

(54) **PROCÉDÉ DE COMPENSATION DE L'USURE CINÉMATIQUE D'UNE COMMANDE D'UN ACTIONNEUR DE TURBOCOMPRESSEUR À GÉOMETRIE VARIABLE**

(30) Priorité: 06.06.2016 FR 1655122
(71) Demandeur: PSA Automobiles SA, 78300 Poissy (FR)
(72) Inventeur: LEMEE, GUILLAUME, 92700 COLOMBES (FR); BROCHE, ERIC, 92140 CLAMART (FR)

(57) **Abrégé**

Procédé de compensation de l'usure cinématique d'une commande d'un actionneur électrique (20) d'un turbocompresseur à géométrie variable muni d'une pluralité d'ailettes aptes à être déplacées en rotation par ledit actionneur (20) pour régler un débit de gaz d'échappement, comportant:
- une étape de mémorisation lors d'une phase d'apprentissage d'une tension d'un capteur de position correspondant à une mise en butée dudit actionneur (20) contre un dispositif de butée (30) lorsque le turbocompresseur est à l'état neuf,
- une étape de mémorisation d'une nouvelle tension dudit capteur de position correspondant à une remise en butée dudit actionneur (20) après une période de fonctionnement ou un nombre de kilomètres parcourus donné,
- une étape de comparaison desdites tensions mémorisées lors de ladite phase d'apprentissage et en fonctionnement pour quantifier une usure (Pr) d'une cinématique de commande, et
- une étape de compensation de ladite usure (Pr) de la cinématique de commande.

## Description

La présente invention porte sur un procédé de compensation de l'usure cinématique d'une commande d'un actionneur de turbocompresseur à géométrie variable. L'invention trouve une application particulièrement avantageuse, mais non exclusive, dans le domaine des véhicules automobiles.

De façon connue en soi, les turbocompresseurs à géométrie variable comportent un dispositif pour réguler l'énergie apportée à la turbine composé de vannes, d'une bague pivotante et d'un actionneur. Ce dispositif comporte en outre une pluralité d'ailettes implantées d'un côté de la bague et espacées angulairement entre elles de façon régulière. Chaque ailette est montée rotative sur une extrémité d'un bras, lequel à son autre extrémité est relié de façon pivotante à la bague. Un actionneur permet de faire fonctionner le dispositif de régulation par l'intermédiaire d'une tige de commande connectée d'un côté à l'actionneur et de l'autre côté à un levier rotatif relié à un bras de commande par l'intermédiaire d'une douille. En faisant tourner la bague, on fait varier la position angulaire des ailettes, ce qui permet d'adapter la perméabilité de la turbine et par conséquent la pression et le débit des gaz d'échappement.

Afin de déterminer la position des ailettes, on instrumente généralement l'actionneur qui commande la géométrie variable, dans la mesure où il se trouve dans une partie moins élevée en température. Toutefois, l'actionneur lutte contre l'effort moyen des gaz d'échappement qui tend à rouvrir la géométrie variable, et l'usure de la cinématique apparaît dans le même sens au niveau des points de contact. A l'usage et sans stratégie spécifique, on a donc une caractéristique de tension du capteur de position en fonction de l'angle des ailettes qui est de plus en plus décalée, ce qui a un effet sur les prestations d'agrément de conduite.

Pour les turbocompresseurs à géométrie variable muni d'un actionneur pneumatique, la position de débit minimum est réglée au banc de flux via une butée physique. On rappelle que la position de débit minimum correspond à un angle des ailettes induisant une perméabilité du turbocompresseur désirée. La mise en butée de l'actionneur garantit d'être précisément à la position de débit minimum désirée, même en cas d'usure des pièces mécaniques entre le capteur et la géométrie variable. Si l'actionneur est à recopie de la position, le contrôle peut mémoriser la valeur de la tension du capteur en butée par apprentissage de la butée, et ainsi compenser l'usure des dispositifs de commande de la géométrie variable.

Pour les turbocompresseurs à géométrie variable munis d'un actionneur électrique, la butée de débit minimum est généralement supprimée car les actionneurs électriques se détériorent lors de la mise en butée, à moins de ralentir fortement l'actionneur en fin de déplacement ce qui dégrade les performances du moteur thermique. La position de débit minimum est réglée au banc de flux via une programmation à une tension précise, par exemple à l'aide d'un capteur muni d'une unité de contrôle dédiée par exemple de type ASIC (pour "Application Specific Integrated Circuit" en anglais).

Si l'on ajoute une butée physique réglée sur la position de débit minimum, lors d'une demande de mise en position de débit minimum, il faut ralentir la vitesse de fermeture de l'actionneur, ce qui limite la montée en pression de suralimentation et donc la performance de la montée du couple moteur. Il est possible d'utiliser des actionneurs intégrant des réducteurs qui résistent à des vitesses d'accostage plus élevées mais au détriment du prix de revient de l'actionneur et éventuellement de son poids et/ou de son encombrement.

L'invention vise à remédier efficacement à ces inconvénients en proposant un procédé de compensation de l'usure cinématique d'une commande d'un actionneur électrique d'un turbocompresseur à géométrie variable muni d'une pluralité d'ailettes aptes à être déplacées en rotation par l'actionneur pour régler un débit de gaz d'échappement, caractérisé en ce que le procédé comporte:
- une étape de mémorisation lors d'une phase d'apprentissage d'une tension d'un capteur de position correspondant à une mise en butée de l'actionneur contre un dispositif de butée lorsque le turbocompresseur est à l'état neuf,
- une étape de mémorisation d'une nouvelle tension du capteur de position correspondant à une remise en butée de l'actionneur après une période de fonctionnement ou un nombre de kilomètres parcourus donné,
- une étape de comparaison des tensions mémorisées lors de la phase d'apprentissage et en fonctionnement pour quantifier une usure d'une cinématique de commande, et
- une étape de compensation de l'usure de la cinématique de commande.

L'invention permet ainsi de rendre plus robuste la position de débit minimum en cas d'usure de la cinématique de commande du turbocompresseur sans avoir à faire appel à un actionneur spécifique qui résiste aux mises en butée rapides, ni à une régulation de position de l'actionneur freiné lors de la mise en position de débit minimum. L'invention permet en outre de corriger la caractéristique de position de la géométrie variable et donc d'améliorer les performances du moteur thermique.

Selon une mise en oeuvre, le dispositif de butée est placé au-delà d'une position de débit minimum. Cela permet au procédé de ne pas être intrusif lors du fonctionnement du moteur thermique.

Selon une mise en oeuvre, les mises en butée de l'actionneur sont réalisées lorsqu'un moteur thermique est coupé avant sa mise en action. Cela permet d'éviter les pulsations des gaz d'échappement et de réaliser l'opération dans des conditions de température non-extrêmes ce qui évite de faire un apprentissage avec des composants dilatés.

Selon une mise en oeuvre, la tension mémorisée de la phase d'apprentissage est remplacée par une valeur moyenne de tension connue pour un lot de production. Cela permet de pouvoir quantifier l'usure, même en cas de perte du contenu de la mémoire du dispositif de commande.

Selon une mise en oeuvre, la tension de la position du dispositif de butée lorsque le turbocompresseur est à l'état neuf est définie par un fournisseur du turbocompresseur. La valeur pourra ainsi être indiquée sur le turbocompresseur, ou être retrouvée à partir de la référence du turbocompresseur afin de l'écrire et la stocker en mémoire dans l'unité de contrôle du moteur.

Selon une mise en oeuvre, la tension retournée par le capteur de position lors de la phase d'apprentissage est remplacée par une valeur stockée par défaut dans une mémoire d'une unité de contrôle. Cela permet d'éviter d'avoir à réaliser un premier apprentissage en usine et en après-vente suite à un changement du turbocompresseur.

Selon une mise en oeuvre, la position du dispositif de butée pour un turbocompresseur à l'état neuf est ajustée sur une tension de référence identique pour tous les turbocompresseurs (par exemple à l'aide d'un capteur muni d'une unité de contrôle dédiée par exemple de type ASIC (pour "Application Specific Integrated Circuit" en anglais). Cela permet d'éviter d'avoir à réaliser un premier apprentissage en usine et en après-vente après un changement de turbocompresseur.

Selon une mise en oeuvre, pour laquelle la pluralité d'ailettes est apte à être déplacée en rotation par l'actionneur par l'intermédiaire d'une bague, le dispositif de butée est obtenu par un usinage spécifique ou ajout d'un pion dans cette bague du turbocompresseur.

Selon une mise en oeuvre, le dispositif de butée est obtenu par un usinage spécifique ou ajout d'un pion dans un boitier turbine du turbocompresseur.

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue en perspective détaillée d'un dispositif de commande de géométrie variable mettant en oeuvre le procédé selon l'invention;
La figure 2 est une représentation schématique du dispositif de commande de géométrie variable illustrant l'évolution des positions correspondant à un débit minimum en fonction de l'usure du turbocompresseur;
La figure 3 est un diagramme des différentes étapes du procédé de compensation de l'usure cinématique d'une commande d'un actionneur électrique de turbocompresseur selon l'invention.

Les éléments identiques, similaires, ou analogues conservent la même référence d'une figure à l'autre.

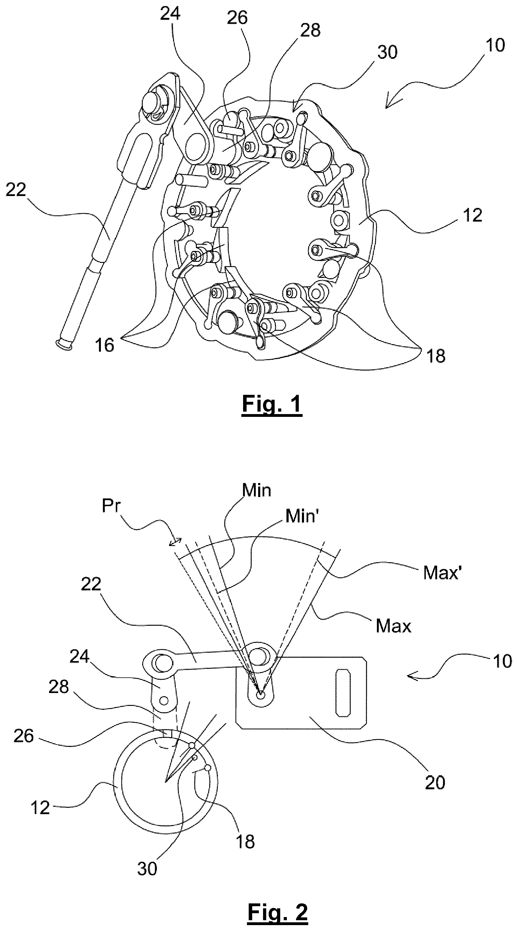

La figure 1 montre un dispositif de commande de géométrie variable 10. Le dispositif 10 est muni d'une bague 12 pouvant pivoter par rapport au boitier de protection de la turbine. Le dispositif de commande de géométrie variable 10 comporte en outre une pluralité d'ailettes 16 implantées d'un côté de la bague 12 et espacées angulairement entre elles de façon régulière. Chaque ailette 16 est montée rotative sur une extrémité d'un bras 18, lequel à son autre extrémité est relié de façon pivotante à la bague 12.

Un actionneur 20, prenant la forme d'un moteur électrique, permet de faire fonctionner le dispositif de commande de géométrie variable 10 par l'intermédiaire d'une tige de commande 22 connectée d'un côté à l'actionneur 20 et de l'autre côté à un levier rotatif 24 relié à un bras de commande 26 par l'intermédiaire d'une douille 28. En faisant varier la position angulaire des ailettes 16, l'actionneur 20 permet ainsi d'adapter la perméabilité de la turbine. L'actionneur 20 est piloté, selon des programmes, par une unité de contrôle dédiée, par exemple un ASIC (pour "Application Specific Integrated Circuit" en anglais).

Le dispositif de commande de géométrie variable 10 comporte en outre un dispositif de butée 30 implanté à proximité d'une ailette 16. Le dispositif de butée 30 pourra par exemple être obtenu en réalisant un usinage spécifique ou en ajoutant un pion dans un élément du dispositif de commande de géométrie variable 10, par exemple la bague 12 ou le boitier turbine. Ce dispositif de butée 30 est placé de préférence au-delà d'une position de débit minimum, c'est-à-dire une position où le turbocompresseur est dit "plus fermé". Cela permet de ne pas être intrusif lors du fonctionnement du moteur thermique. Par ailleurs, ce dispositif de butée 30 n'a pas forcément besoin d'être étalonné.

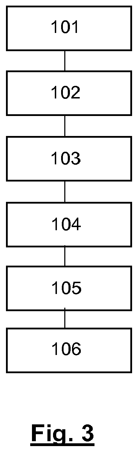

On décrit ci-après en référence avec la figure 3, les différentes étapes du procédé de compensation de l'usure cinématique d'une commande d'un actionneur électrique de turbocompresseur selon l'invention.

Suivant une première étape 101, une unité de contrôle du moteur thermique commande, lors d'une phase d'apprentissage, une mise en butée de l'actionneur 20 et mémorise, dans une étape 102, la tension correspondante d'un capteur de position. Cette phase d'apprentissage est mise en oeuvre lorsque le turbocompresseur est à l'état neuf, c'est-à-dire notamment en sortie d'usine ou suite à un changement de turbocompresseur en après-vente, avant sa première utilisation lorsque le moteur est en action.

De préférence, les mises en butée de l'actionneur 20 sont réalisées lorsque le moteur est coupé avant sa mise en action. Cela permet d'éviter les pulsations des gaz d'échappement et de réaliser l'opération dans des conditions de températures non-extrêmes, ce qui évite de faire un apprentissage avec des composants dilatés. Cet apprentissage à neuf de la position en butée sert alors de référence (dispositif de commande sans usure).

Durant la vie du moteur thermique et lorsque les conditions le permettent, l'unité de contrôle du moteur commande occasionnellement, dans une étape 103, une mise en butée de l'actionneur 20, par exemple pour un nombre de kilomètres parcourus donné ou après une période de fonctionnement du moteur thermique. Une nouvelle tension du capteur de position correspondant à la remise en butée de l'actionneur 20 est mémorisée dans une mémoire de l'unité de contrôle du moteur dans une étape 104.

En comparant, dans une étape 105, la tension mémorisée lors de cette nouvelle mise en butée avec la valeur de tension acquise lors de la phase d'apprentissage à neuf, la stratégie de commande de l'unité de contrôle du moteur peut quantifier l'usure Pr de la cinématique de commande. Il sera ainsi possible de compenser cette usure dans une étape 106, afin de rendre plus fiable la position de débit minimum, comme cela est illustré par la figure 2. On précise que, sur cette figure, les références Min et Max correspondent à des mises en butée de l'actionneur 20 pour un turbocompresseur neuf, et que les références Min' et Max' correspondent à des mises en butée de l'actionneur 20 pour un turbocompresseur usagé.

Suivant une mise en oeuvre, afin d'éviter la perte de la fonction en cas de perte de mémoire de la tension de position de la butée à neuf, par exemple avec une mémoire de type EEPROM défectueuse, on remplace la tension mémorisée au cours de la phase d'apprentissage par une position moyenne de tension connue pour un lot de production. Cela permet de pouvoir quantifier l'usure Pr, même en cas de perte du contenu de la mémoire de l'unité de contrôle du moteur.

Avantageusement, la tension de la position du dispositif de butée 30 lorsque le turbocompresseur est à l'état neuf est définie par le fournisseur du turbocompresseur. La valeur pourra ainsi être indiquée sur le turbocompresseur, ou être retrouvée à partir de la référence du turbocompresseur afin de l'écrire et la stocker en mémoire dans l'unité de contrôle du moteur.

En variante, la tension du capteur en position sur le pion est programmée dans l'unité de contrôle, par exemple un ASIC. Cela évite de faire un premier apprentissage en usine et en après-vente suite à un changement de turbocompresseur, la valeur en position de butée étant fixe.

Dans une autre variante, la position du dispositif de butée 30 pour un turbocompresseur à l'état neuf est ajustée sur une tension de référence identique pour tous les turbocompresseurs. Cela permet d'éviter d'avoir à réaliser un premier apprentissage en usine et en après-vente après un changement de turbocompresseur.

L'invention permet ainsi de rendre plus fiable la position de débit minimum en cas d'usure de la cinématique de commande du turbocompresseur en évitant d'avoir recours à un actionneur 20 spécifique et coûteux qui résiste aux mises en butée rapides, où à une régulation de position de l'actionneur 20 freinée lors de la mise en position de débit minimum.

## Revendications

1. Procédé de compensation de l'usure cinématique d'une commande d'un actionneur électrique (20) d'un turbocompresseur à géométrie variable muni d'une pluralité d'ailettes (16) aptes à être déplacées en rotation par ledit actionneur (20) pour régler un débit de gaz d'échappement, **caractérisé en ce que** ledit procédé comporte:
- une étape (102) de mémorisation lors d'une phase d'apprentissage d'une tension d'un capteur de position correspondant à une mise en butée (101) dudit actionneur (20) contre un dispositif de butée (30) lorsque le turbocompresseur est à l'état neuf,
- une étape (104) de mémorisation d'une nouvelle tension dudit capteur de position correspondant à une remise en butée (103) dudit actionneur (20) après une période de fonctionnement ou un nombre de kilomètres parcourus donné,
- une étape (105) de comparaison desdites tensions mémorisées lors de ladite phase d'apprentissage et en fonctionnement pour quantifier une usure (Pr) d'une cinématique de commande, et
- une étape (106) de compensation de ladite usure (Pr) de la cinématique de commande.

2. Procédé selon la revendication 1, **caractérisé en ce que** ledit dispositif de butée (30) est placé au-delà d'une position de débit minimum.

3. Procédé selon la revendication 1 ou la revendication 2, **caractérisé en ce que** lesdites mises en butée (101, 103) dudit actionneur (20) sont réalisées lorsqu'un moteur thermique est coupé avant sa mise en action.

4. Procédé selon l'une quelconque des revendications 1 à 3, **caractérisé en ce que** ladite tension mémorisée de ladite phase d'apprentissage est remplacée par une valeur moyenne de tension connue pour un lot de production.

5. Procédé selon l'une quelconque des revendications 1 à 3, **caractérisé en ce que** ladite tension de position dudit dispositif de butée (30) lorsque ledit turbocompresseur est à l'état neuf est définie par un fournisseur dudit turbocompresseur.

6. Procédé selon l'une quelconque des revendications 1 à 3, **caractérisé en ce que** ladite tension retournée par ledit capteur de position lors de ladite phase d'apprentissage est remplacée par une valeur stockée par défaut dans une mémoire d'une unité de contrôle.

7. Procédé selon l'une quelconque des revendications 1 à 3, **caractérisé en ce que** ladite position dudit dispositif de butée (30) pour un turbocompresseur à l'état neuf est ajustée sur une tension de référence identique pour tous les turbocompresseurs.

8. Procédé selon l'une quelconque des revendications 1 à 7, **caractérisé en ce que** la pluralité d'ailettes (16) étant apte à être déplacée en rotation par ledit actionneur (20) par l'intermédiaire d'une bague (12), ledit dispositif de butée (30) est obtenu par un usinage spécifique ou ajout d'un pion dans ladite bague (12) dudit turbocompresseur.

9. Procédé selon l'une quelconque des revendications 1 à 7, **caractérisé en ce que** ledit dispositif de butée (30) est obtenu par un usinage spécifique ou ajout d'un pion dans un boitier de turbine du turbocompresseur.
